# EUROPEAN PATENT SPECIFICATION

(11) **EP 4 355 974 B1**
(45) Date of publication and mention of the grant of the patent: **06.08.2025**
(21) Application number: 22737659.7
(22) Date of filing: 12.06.2022
(51) Int. Cl.: E06B 9/68, E06B 9/72, F16C 23/04

(54) **DRIVE FOR ROLLING SHUTTER**
ANTRIEB FÜR ROLLADEN
ENTRAÎNEMENT POUR VOLET ROULANT

(30) Priority: 15.06.2021 IT 202100015551
(43) Date of publication of application: 24.04.2024
(73) Proprietor: Nice S.p.A., 31046 Oderzo (TV) (IT)
(72) Inventor: PROIETTI, Luca, 31046 Oderzo (TV) (IT); SCATÀ, Corrado, 31046 Oderzo (TV) (IT); CONGEDO, Carlo, 31046 Oderzo (TV) (IT)
(74) Representative: Citron, Massimiliano
(86) International application number: PCT/IB2022/055428
(87) International publication number: WO 2022/263988

(56) References cited:
- CN-U- 202 059 265
- IT-A1- BO20 120 419
- JP-A- 2005 054 374
- JP-A- H07 208 047

## Description

The invention generally refers to a drive for a preinstalled rolling shutter.

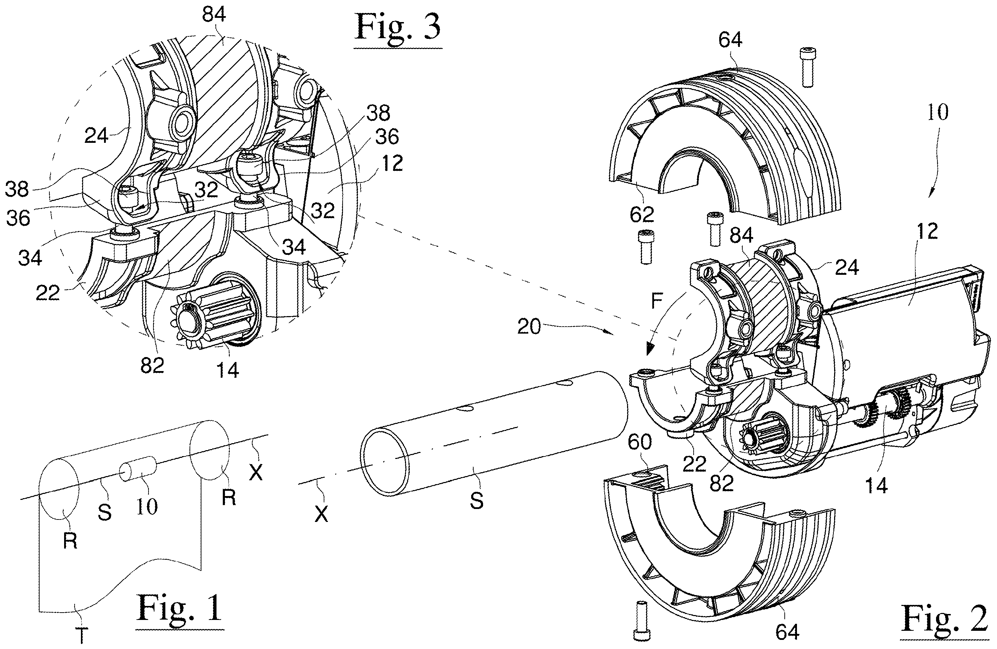

A preinstalled rolling shutter usually comprises (fig. 1) a fixed horizontal shaft S supporting idle rollers R around which a flexible shutter T can be wound. When it is desired to motorize the shutter T, a model of drive 10 is used which must be suitably disassembled to perform its attachment around the shaft S. When the assembly is completed, the drive 10 remains suspended on the shaft S, which passes through the drive 10 from side to side.

Mounting of the drive 10 involves a considerable loss of time for the installer because several components have to be handled many times, i.e. the drive has to be disassembled, applied to the shaft S, and then reassembled again. The reassembly involves "closing" the drive 10 around the shaft S, a very complicated operation that is performed in tight spaces while having to support the drive 10 at the same time.

CN 202 059 265 U, JP H07 208047 A and IT B020 120 419 A1 disclose known support devices for a blind. In particular, CN202059265U discloses a drive for rolling shutter, the drive being mountable on a fixed shaft supporting the shutter and extending along a horizontal axis, said drive comprising a tube formed of at least two parts that are joinable to clamp within the tube the needle bearing, a drum which is mounted around the tube coaxially and so as to rotate with respect to the needle bearing about said horizontal axis, the drum comprising an outer surface on which to wind up the shutter, an electric motor to rotate the drum about the axis,the two parts are constrained so that one can move with respect to the other.

The main object of the invention is to improve this state of the art.

Another object is to propose a drive that eliminates or mitigates the above problem.

A rolling shutter drive is proposed, the drive being mountable on a fixed shaft which supports the shutter and extends along a horizontal axis, comprising:
a bushing formed of at least two parts that can be joined to tighten within the bushing the fixed shaft,
a drum that is mounted around the bushing coaxially and so as to rotate with respect to the bushing about said horizontal axis, the drum comprising an outer surface on which to wind up the shutter,
an electric motor for rotating the drum about the axis,
wherein the two parts are constrained so that one can move relative to the other while remaining connected thereto for opening the bushing by moving the two parts apart and thus allow the shaft to be mounted inside the bushing.

Namely, the bushing comprises connecting means or a connecting member between the two parts, the means being configured so that one part can move relative to the other - while remaining connected to it - for opening the bushing by moving the two parts apart and thus allow the shaft to be mounted inside the bushing.

This way, the number of disassembly and reassembly steps during installation is reduced because the application of the fixed shaft inside the bushing no longer requires handling and manipulating two separate pieces of the bushing.

Preferably, the drive comprises the connecting means or a connecting member and blocking means or a blocking member for locking the two parts in relative position. For simplicity of construction, the connecting means or members and the locking means or members may coincide but not necessarily.

The two parts can be constrained in different ways.

In an embodiment, the two parts are constrained, or the connecting means or connecting member are configured, so that one part can rotate relative to the other
about an axis parallel to said horizontal axis, and/or
about an axis orthogonal to a plane passing through said horizontal axis.

To achieve the above-mentioned rotations, in particular the two parts are connected by a cylindrical or spherical hinge, but not necessarily. It is sufficient, for example, for the two parts to be coupled by mutual-connection means or members that can be slackened to separate the two parts by a certain distance, with adequate slack (e.g. by means of lockable bolts), thereby allowing the bushing to break up to embrace the fixed shaft.

Preferably, the hinge comprises, on one part, a pass-through eyelet and, on the other part, a protruding pin inserted with play in the eyelet, the pin and the eyelet being inseparable by means of an end of the pin having a width greater than that of the eyelet. The pin is, for example, a screw with a shank and a head wider than the shank.

Specifically, as a simple but effective construction, the part comprising the eyelet comprises an ear or flange in which the eyelet is formed. More specifically, the ear or flange is cup-shaped, with a curvature that comprises a bottom and a rim surrounding the bottom. The eyelet extends on the curvature from the bottom toward the rim along a direction contained within a plane orthogonal to said horizontal axis. This way, the part comprising the eyelet can rotate relative to the other part.

To simplify the construction, the two parts are preferably semi-cylindrical shells or of equivalent shape.

Preferably, the drum is formed of two (e.g. equal) semi-crowns which are combinable and clampable together around the bushing.

Preferably, the drive comprises an anti-friction member arranged between the bushing and the drum to promote relative rotation. The anti-friction member is not strictly necessary, however, as e.g. good greasing may suffice.

In drives of the above type, a rubber band in which a number of rollers are arranged is known to be used as an anti-friction member. The band must be removed both during disassembly of the motor and during reassembly. During assembly, the band must be literally rolled around the bushing and at the same time must be held in place while awaiting the insertion of a half-crown, an operation that requires a considerable loss of time. Another negative aspect of the roller band is that it has only one correct bending direction for which the rollers are prevented from slipping out of their seats. It happens very often that the installer bends the band in the wrong direction causing the rollers to come out.

Preferably, the drive then comprises an anti-friction cylindrical shell arranged between the bushing and the drum, the anti-friction cylindrical shell being formed of semi-cylindrical shells, e.g., two or more semi-cylindrical shells, which are deformable to elastically embrace the bushing, or a respective part thereof, and remain attached to it.

This solution independently solves the problem of efficiently mounting the anti-friction member, avoiding the inconvenience of the anti-friction member having to be manually held fixed during assembly. The semi-cylindrical shells also eliminate the inconvenience of the rollers. In an embodiment, the drive comprises the anti-friction member as defined here but the two parts are not constrained to each other so that one can move relative to the other, while remaining connected, to open the bushing by moving the two parts apart.

More preferably, the semi-cylindrical shells are sheets of anti-friction material, particularly made of Teflon or polyoxymethylene (POM), materials that have demonstrated optimal performance.

Even more preferably, the semi-cylindrical shells develop with a radius of curvature smaller than that of one of said parts, so as to adhere to the relative part by tightening it thanks to the elastic return reaction of the material forming them.

The following description of a preferred embodiment of drive for rolling shutter drive will highlight further advantages thereof, referring to the attached drawings in which:
- Fig. 1 shows a schematic view of the context of a drive;
- Fig. 2 shows a three-dimensional view of a rolling shutter drive;
- Fig. 3 is an enlargement of fig. 2.

The drive 10 in Fig. 2 is mountable on the fixed shaft S, as in Fig. 1, which has a longitudinal axis X.

The drive 10 comprises a body 12 that internally houses an electric motor to operate the shutter T.

At one end of the body 12 is a bushing 20 into which the shaft S can be inserted and blocked, so that when assembly is complete, the drive 10 remains hung in the shaft S. Two known half-crowns 60, 62 are joinable together, e.g. by means of screws, and mountable concentrically around the bushing 20 to form a composite crown that has an outer cylindrical surface 64 on which to wind the shutter T.

The drive 10 comprises a kinematics 14 by which the electric motor can put the drum formed of the juxtaposition of the half-crowns 60, 62 into rotation about the X axis. As a result, the shutter T is wound on the surface 64 and can be raised or lowered.

The bushing 20 is formed of two parts or semi-bushings 22, 24 that are separable to break up the bushing 20. Such breakdown allows the fixed shaft S to be clamped inside the composite bushing 20. In other words, the bushing 20 functions as a clamp to fix the drive 10 on the shaft S.

The two parts or half-bushings 22, 24 are constrained (see also Fig. 3), at least temporarily, so that one can move relative to the other or rotate relative to the other only or also about an axis parallel to the X axis. To achieve such rotation, the parts or half-bushings 22, 24 are e.g. connected by a cylindrical or spherical hinge. **It** is sufficient, however, for the two parts or half-bushings 22, 24 to be coupled by means of mutual-connection means that can be slackened to separate the two parts or half-bushings 22, 24 by a certain distance. The slack between the two parts or half- bushings 22, 24 creates a space between the two parts or half- bushings 22, 24 to insert the fixed shaft S into the inner cavity of the bushing 20.

A preferred shape for the connecting means can be seen in Fig. 3. The part or half-bushing 24 comprises a projecting ear or flange 36 provided with a pass-through eyelet; the other part or half-bushing 22 comprises a projecting pin 34 inserted through the eyelet. The pin 34 and the eyelet cannot separate because one end 38 of the pin 34 is wider than that of the eyelet. E.g. the pin 34 is a bolt which has a shank and a head 38 wider than the shank, and which can be screwed into the part or half-bushing 22.

The number of pins 34 and corresponding ears 36 may vary from what is illustrated, sufficing, for example, one single pin 34 and corresponding ear 36.

The ear or flange 36 is shaped as a cup having a bottom and a rim surrounding the bottom. The eyelet extends from the bottom to the rim along a direction contained within a plane orthogonal to the horizontal X axis.

Since the eyelet crosses a curved surface of the ear 36, an end of the part or half-bushing 24 can rotate relative to the part or half-bushing 22 about an axis parallel to the X axis (see arrow F). The end of the part or half-bushing 24 thus can move away from the corresponding end of the part or half-bushing 22, while the other end of the part or half-bushing 24 remains constrained to the part or half-bushing 22 via the pin 34. The detachment is sufficient to open the inner cavity of the bushing 20 and allow the shaft S to be accommodated therein.

During installation, the two pins 34 are partially unscrewed to allow the part or half-bushing 24 to move away from the part or half-bushing 22 but at the same time to remain attached to it. Then the shaft S is inserted between the two parts or half-bushings 22, 24, the part or half-bushing 24 is brought back to match its edges with those of the part or half-bushing 22, and the bolts 34 are screwed again to lock the parts or half-bushing 22, 24 in place. The parts or half-bushings 22, 24 so tightened to each other clamp the shaft S.

Preferably, the parts or half-bushings 22, 24 are blockable to each other also on the matching edges opposite the ears 36, e.g. by bolts. To simplify the construction, the two parts or half-bushings 22, 24 are preferably semi-cylindrical shells to form a cylindrical bushing when they are joined to each other.

It is then understood that the simultaneous inseparability and relative mobility of the two parts or half-bushings 22, 24 ensures a very convenient and fast assembly or disassembly of the shaft S inside the bushing 20 because the problem of handling two pieces that might fall off is eliminated.

Preferably, the drive comprises an anti-friction cylindrical shell arranged between the bushing 20 and the drum formed of the union of the half-crowns 60, 62. The cylindrical anti-friction shell is formed of two semi-cylindrical shells 82, 84, each deformable to respectively elastically embrace a part or half-bushing 22, 24 and remain attached thereto. More preferably, the two semi-cylindrical shells 82, 84 are sheets, e.g. made of Teflon or POM.

It is then understood that the two semi-cylindrical shells 82, 84 can be mounted one after the other on the bushing 20 very conveniently and one at a time.

## Claims

1. Drive for rolling shutter (T), the drive being mountable on a fixed shaft (S) which supports the shutter (T) and extends along a horizontal axis (X), comprising:
a bushing (20) formed of at least two parts (22, 24) that are joinable to clamp within the bushing (20) the fixed shaft (S),
a drum (60, 62) which is mounted around the bushing (20) coaxially and so as to rotate with respect to the bushing (20) about said horizontal axis (X), the drum comprising an outer surface (64) on which to wind up the shutter (T),
an electric motor for rotating the drum about the axis (X),
wherein the two parts (22, 24) are constrained so that one can move with respect to the other while remaining connected thereto to open the bushing (20) by moving the two parts (22, 24) apart and thus allow the shaft (S) to be mounted inside the bushing.

2. Drive according to claim 1, wherein the two parts (22, 24) are constrained such that one can rotate relative to the other about an axis parallel to said horizontal axis (X).

3. Drive according to claim 1 or 2, wherein the two parts (22, 24) are constrained so that one can rotate relative to the other about an axis orthogonal to a plane passing through said horizontal axis (X).

4. Drive according to any preceding claim, wherein the two parts (22, 24) are connected by a cylindrical or spherical hinge.

5. Drive according to claim 4, wherein the hinge comprises, on one part (24), a pass-through eyelet and, on the other part (22), a protruding pin (34) inserted with play into the eyelet, the pin and the eyelet being inseparable by means of an end (38) of the pin having a width greater than that of the eyelet.

6. Drive according to claim 5, wherein said one part (24) comprising the eyelet comprises a cup-shaped ear or flange (36) in which the eyelet is formed.

7. Drive according to claim 6, wherein
the ear or flange (36) has a bottom and a rim surrounding the bottom,
the eyelet extending from the bottom to the rim along a direction contained within a plane orthogonal to the horizontal axis (X).

8. Drive according to any preceding claim, comprising an anti-friction cylindrical shell arranged between the bushing and the drum, the anti-friction cylindrical shell being formed of semi-cylindrical shells (82, 84) which are deformable for elastically embracing the bushing, or respectively one of said parts, and remaining attached thereto.

9. Drive according to claim 8, wherein the semi-cylindrical shells (82, 84) are sheets of anti-friction material.

10. Drive according to claim 8 or 9, wherein the semi-cylindrical shells (82, 84) are made of Teflon or polyoxymethylene (POM).

11. Drive according to claim 8 or 9 or 10, wherein the semi-cylindrical shells (82, 84) develop with a radius of curvature smaller than that of one of said parts (22, 24), so as to adhere to the relative part by tightening it thanks to the elastic return reaction of the material forming them.

12. Drive according to any preceding claim, wherein the two parts (22, 24) are semi-cylindrical shells.

13. Drive according to any preceding claim, wherein, the drum is formed of two semi-crowns (60, 62) which are combinable and clampable together around the bushing (20.

14. Drive according to any preceding claim, wherein the bushing (20) comprises connecting means or a connecting member between the two parts (22, 24), the means being configured so that one part (22) can move relative to the other part (24) - while remaining connected to it - for opening the bushing (20) by moving the two parts (22, 24) apart and thus allow the shaft (S) to be mounted inside the bushing (20).

15. Drive according to claim 14, comprising blocking means or a blocking member for locking the two parts (22, 24) in relative position.

## Patentansprüche

1. Antrieb für einen Rolladen (T), wobei der Antrieb auf einer festen Welle (S) montierbar ist, die den Rolladen (T) trägt und sich entlang einer horizontalen Achse (X) erstreckt, umfassend:
eine Buchse (20), die aus mindestens zwei Teilen (22, 24) gebildet ist, die miteinander verbunden werden können, um die feste Welle (S) in der Buchse (20) zu klemmen,
eine Trommel (60, 62), die koaxial um die Buchse (20) herum angebracht ist und sich in Bezug auf die Buchse (20) um die horizontale Achse (X) drehen kann, wobei die Trommel eine Außenfläche (64) aufweist, auf die der Rollladen (T) aufgewickelt werden kann,
einen Elektromotor zum Drehen der Trommel um die Achse (X),
wobei
die beiden Teile (22, 24) so miteinander verbunden sind, dass sich eines relativ zum anderen bewegen kann, während es mit diesem verbunden bleibt, um die Buchse (20) durch Auseinanderbewegen der beiden Teile (22, 24) zu öffnen und so die Montage der Welle (S) in der Buchse zu ermöglichen.

2. Antrieb nach Anspruch 1, wobei die beiden Teile (22, 24) so miteinander verbunden sind, dass sich eines relativ zum anderen um eine zur horizontalen Achse (X) parallele Achse drehen kann.

3. Antrieb nach Anspruch 1 oder 2, wobei die beiden Teile (22, 24) so miteinander verbunden sind, dass sich eines relativ zum anderen um eine Achse drehen kann, die orthogonal zu einer durch die horizontale Achse (X) verlaufenden Ebene ist.

4. Antrieb nach einem der vorstehenden Ansprüche, wobei die beiden Teile (22, 24) durch ein zylindrisches oder kugelförmiges Scharnier verbunden sind.

5. Antrieb nach Anspruch 4, wobei das Gelenk an einem Teil (24) eine Durchgangsöse und am anderen Teil (22) einen vorstehenden Stift (34) umfasst, der mit Spiel in die Öse eingeführt ist, wobei der Stift und die Öse durch ein Ende (38) des Stifts, dessen Breite größer ist als die der Öse, untrennbar miteinander verbunden sind.

6. Antrieb nach Anspruch 5, wobei der eine Teil (24) mit der Öse einen becherförmigen Ansatz oder Flansch (36) aufweist, in dem die Öse ausgebildet ist.

7. Antrieb nach Anspruch 6, wobei
der Ansatz oder Flansch (36) einen Boden und einen den Boden umgebenden Rand aufweist,
wobei sich die Öse vom Boden zum Rand entlang einer Richtung erstreckt, die in einer Ebene orthogonal zur horizontalen Achse (X) liegt.

8. Antrieb nach einem der vorstehenden Ansprüche, umfassend eine zwischen der Buchse und der Trommel angeordnete reibungsmindernde zylindrische Hülle, wobei die reibungsmindernde zylindrische Hülle aus halbzylindrischen Hüllen (82, 84) gebildet ist, die verformbar sind, um die Buchse bzw. eines der Teile elastisch zu umschließen und daran befestigt zu bleiben.

9. Antrieb nach Anspruch 8, wobei die halbzylindrischen Schalen (82, 84) aus reibungsminderndem Material bestehen.

10. Antrieb nach Anspruch 8 oder 9, wobei die halbzylindrischen Schalen (82, 84) aus Teflon oder Polyoxymethylen (POM) bestehen.

11. Antrieb nach Anspruch 8 oder 9 oder 10, wobei die halbzylindrischen Schalen (82, 84) einen Krümmungsradius aufweisen, der kleiner ist als der eines der Teile (22, 24), so dass sie dank der elastischen Rückstellkraft des Materials, aus dem sie bestehen, an dem entsprechenden Teil haften bleiben.

12. Antrieb nach einem der vorstehenden Ansprüche, wobei die beiden Teile (22, 24) halbzylindrische Schalen sind.

13. Antrieb nach einem der vorstehenden Ansprüche, wobei die Trommel aus zwei Halbkronen (60, 62) gebildet ist, die miteinander kombinierbar und um die Buchse (20) herum zusammenklemmbar sind.

14. Antrieb nach einem der vorstehenden Ansprüche, wobei die Buchse (20) Verbindungsmittel oder ein Verbindungselement zwischen den beiden Teilen (22, 24) umfasst, wobei die Mittel so konfiguriert sind, dass sich ein Teil (22) relativ zum anderen Teil (24) bewegen kann - während es mit diesem verbunden bleibt -, um die Buchse (20) durch Auseinanderbewegen der beiden Teile (22, 24) zu öffnen und so die Montage der Welle (S) innerhalb der Buchse (20) zu ermöglichen.

15. Antrieb nach Anspruch 14, umfassend eine Sperreinrichtung oder ein Sperrelement zum Verriegeln der beiden Teile (22, 24) in ihrer relativen Position.

## Revendications

1. Entraînement pour volet roulant (T), l'entraînement pouvant être monté sur un arbre fixe (S) qui supporte le volet (T) et s'étend le long d'un axe horizontal (X), comprenant :
une douille (20) formée d'au moins deux parties (22, 24) qui peuvent être assemblées pour serrer l'arbre fixe (S) à l'intérieur de la douille (20),
un tambour (60, 62) qui est monté autour de la douille (20) de manière coaxiale et de façon à tourner par rapport à la douille (20) autour dudit axe horizontal (X), le tambour comprenant une surface extérieure (64) sur laquelle enrouler le volet (T),
un moteur électrique pour faire tourner le tambour autour de l'axe (X),
dans lequel
les deux parties (22, 24) sont contraintes de manière à pouvoir se déplacer l'une par rapport à l'autre tout en restant reliées à celle-ci pour ouvrir la douille (20) en écartant les deux parties (22, 24) et permettre ainsi le montage de l'arbre (S) à l'intérieur de la douille.

2. Entraînement selon la revendication 1, dans lequel les deux parties (22, 24) sont contraintes de telle sorte que l'une puisse tourner par rapport à l'autre autour d'un axe parallèle audit axe horizontal (X).

3. Entraînement selon la revendication 1 ou 2, dans lequel les deux parties (22, 24) sont contraintes de telle sorte que l'une puisse tourner par rapport à l'autre autour d'un axe orthogonal à un plan passant par ledit axe horizontal (X).

4. Entraînement selon l'une quelconque des revendications précédentes, dans lequel les deux parties (22, 24) sont reliées par une charnière cylindrique ou sphérique.

5. Entraînement selon la revendication 4, dans lequel la charnière comprend, sur une partie (24), un œillet traversant et, sur l'autre partie (22), une broche saillante (34) insérée avec jeu dans l'œillet, la broche et l'œillet étant inséparables au moyen d'une extrémité (38) de la broche ayant une largeur supérieure à celle de l'œillet.

6. Entraînement selon la revendication 5, dans lequel ladite partie (24) comprenant l'œillet comprend une oreille ou une bride en forme de coupelle (36) dans laquelle l'œillet est formé.

7. Entraînement selon la revendication 6, dans lequel
l'oreille ou la bride (36) comporte un fond et un rebord entourant le fond,
l'œillet s'étendant du fond au rebord dans une direction contenue dans un plan orthogonal à l'axe horizontal (X).

8. Entraînement selon l'une quelconque des revendications précédentes, comprenant une enveloppe cylindrique antifriction disposée entre la douille et le tambour, l'enveloppe cylindrique antifriction étant formée d'enveloppes semi-cylindriques (82, 84) qui sont déformables pour enserrer élastiquement la douille, ou respectivement l'une desdites parties, et rester fixées à celle-ci.

9. Entraînement selon la revendication 8, dans lequel les coques semi-cylindriques (82, 84) sont des feuilles de matériau antifriction.

10. Entraînement selon la revendication 8 ou 9, dans lequel les coques semi-cylindriques (82, 84) sont en Téflon ou en polyoxyméthylène (POM).

11. Entraînement selon la revendication 8, 9 ou 10, dans lequel les coques semi-cylindriques (82, 84) développent un rayon de courbure inférieur à celui de l'une desdites pièces (22, 24), de manière à adhérer à la pièce correspondante en la serrant grâce à la réaction de retour élastique du matériau qui les compose.

12. Entraînement selon l'une quelconque des revendications précédentes, dans lequel les deux pièces (22, 24) sont des coques semi-cylindriques.

13. Entraînement selon l'une quelconque des revendications précédentes, dans lequel le tambour est formé de deux demi-couronnes (60, 62) qui peuvent être combinées et serrées ensemble autour de la douille (20).

14. Entraînement selon l'une quelconque des revendications précédentes, dans lequel la douille (20) comprend des moyens de connexion ou un élément de connexion entre les deux parties (22, 24), les moyens étant configurés de telle sorte qu'une partie (22) peut se déplacer par rapport à l'autre partie (24) - tout en restant connectée à celle-ci - pour ouvrir la douille (20) en écartant les deux parties (22, 24) et permettre ainsi le montage de l'arbre (S) à l'intérieur de la douille (20).

15. Entraînement selon la revendication 14, comprenant des moyens de blocage ou un élément de blocage pour verrouiller les deux parties (22, 24) dans leur position relative.
